Europäisches Patentamt

European Patent Office

Office européen des brevets

(19)

(11) EP 0 380 371 B1

(12) EUROPEAN PATENT SPECIFICATION

(45) Date of publication and mention
of the grant of the patent:
14.08.1996 Bulletin 1996/33

(51) Int Cl.⁶: **G08C 19/28**

(21) Application number: 90300862.1

(22) Date of filing: 26.01.1990

(54) **Memory remote control device**

Fernsteuervorrichtung mit Speicher

Dispositif de commande à distance avec mémoire

(84) Designated Contracting States:
DE ES FR GB

(30) Priority: 27.01.1989 JP 18499/89
20.02.1989 JP 19346/89
09.05.1989 JP 53860/89

(43) Date of publication of application:
01.08.1990 Bulletin 1990/31

(73) Proprietor: SHARP KABUSHIKI KAISHA
Osaka 545 (JP)

(72) Inventors:
• Araki, Yasuhiro
Yaita-shi, Tochigi-Ken (JP)
• Nanbu, Masaru
Yaita-shi, Tochigi-ken (JP)

(74) Representative: Brown, Kenneth Richard et al
R.G.C. Jenkins & Co.
26 Caxton Street
London SW1H 0RJ (GB)

(56) References cited:
US-A- 4 626 848

• PATENT ABSTRACTS OF JAPAN vol. 13, no. 121
(E-732)(3469) 24 March 1989
• FUNKSCHAU. vol. 59, no. 26, 18 December 1987,
MUNCHEN, DE; pages 67 - 71; E. BADENIUS ET
AL: 'Ein Infrarot-Fernbedienungstester'

## Description

The present invention relates to a learning remote control device, a so-called "memory remote control", having a learning capability in which a remote-control signal can be stored in a memory after such remote-control signal has been received and analyzed and can be reproduced for transmission on the basis of data stored in the memory. The invention also relates to a method of storing commands in such a device.

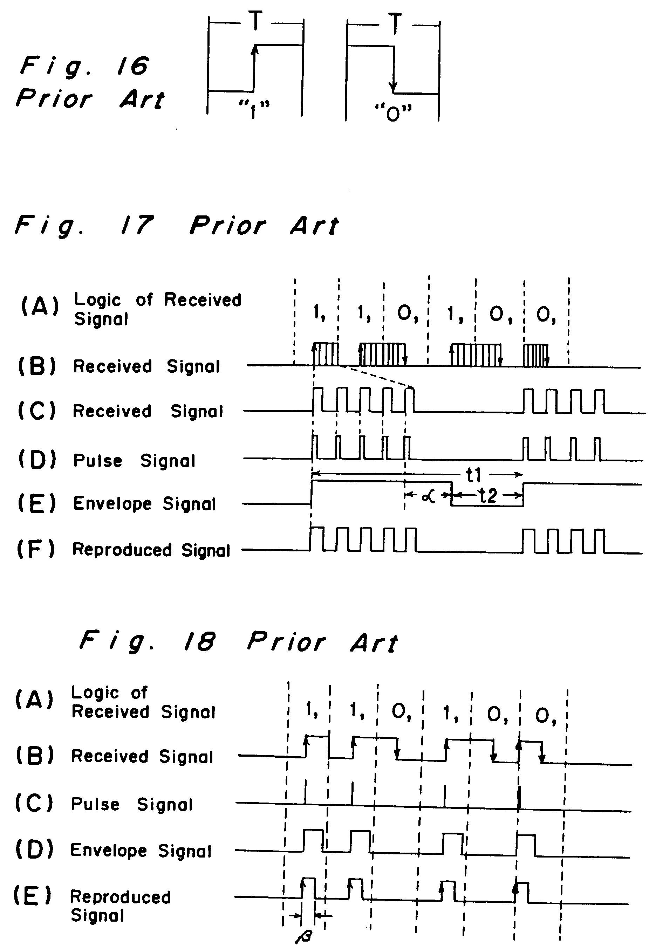

In the memory remote control device, the remote-control signal is received and analyzed for conversion into data which are subsequently stored in a memory. According to the prior art as shown in Fig. 15, the remote-control signal received by a photodiode 1 is supplied to a wave shaping circuit 2, having a one-shot circuit built therein, by which the received remote-control signal is shaped into a pulse signal and also into an envelope signal from which a carrier wave has been removed on the basis of the pulse signal. These pulse and envelope signals are supplied to a microcomputer 3 which is operable to measure and calculate necessary data such as the frequency of the carrier wave of the received remote-controlled signal, etc., on the basis of the pulse and envelope signals for storage into the memory.

Generally in the memory remote control device, a logic determination of digital data "0" and "1" is carried out in reference to a period between the set-up and set-down timings of the pulse of the received remote-control signal. However, in some European countries, as shown in Fig. 16, a unique logic determination is employed in which the set-up and set-down timings of the pulse signal within a predetermined time T are deemed to be "1" and "0", respectively and, where such unique logic determination is employed, there is available two type of remote-control signals; one being the remote-control signal modulated by the carrier wave and the other being the remote-control signal having no carrier wave.

Fig. 17 illustrates waveforms of various signals used for the explanation of the operation in which the remote-control signal modulated by the carrier wave in the environments in which the above described unique logic determination is employed is analyzed by the prior art memory remote control device of the construction shown in Fig. 15. In this figure, Fig. 17(A) represents a logic of the received remote-control signal; Fig. 17(B) represents the received remote-control signal; Fig. 17 (C) represents an enlarged view thereof; Fig. 17(D) represents the pulse signal shaped into a pulse by the wave shaping circuit 2; Fig. 17(E) represents the envelope signal from which the carrier wave has been removed; and Fig. 17(F) represents a remote-control-signal which has been reproduced.

In the wave shaping circuit 2 having the one-shot circuit built therein, the pulse signal having a predetermined pulse width as shown in Fig. 17(D) is outputted on the basis of the set-up timing of the received remote-controlled signal shown in Fig. 17(C) and the envelope signal shown in Fig. 17(E) is also outputted which envelope signal sets up in synchronism with the set-up timing of the pulse signal and sets down when the pulse signal is not present during a predetermined period $\alpha$.

As hereinabove described, while the wave shaping circuit 2 detects the set-up timing of the received remote-controlled signal, the set-down timing corresponding to the logic "0" of the remote-control signal tends to be detected as the set-up of the carrier wave because of the presence of the carrier wave, which is subsequently converted into data. Therefore, it can be processed and treated as is the case with a remote-control signal which has been modulated according to a pulse position modulation (PPM) scheme such as generally employed in Japan.

In other words, the microcomputer 3 calculates the number N of pulses during a high level period of the envelope signal, measures one cycle period $t_1$ of the envelope signal and a low level period $t_2$ of the envelope signal and calculates the frequency $f$ of the carrier wave according to the following equation on the basis of these data.

$$f = (N - 1)/(t_1 - t_2 - \alpha)$$

The data including the frequency of the carrier wave of the remote-controlled signal so analyzed are stored in the memory and, on the basis of the data so stored in the memory, the remote-controlled signal can be faithfully reproduced for transmission as shown in Fig. 17(F).

On the other hand, Fig. 18 illustrates waveforms used for the explanation of the operation in which the remote-control signal having no carrier wave in the environments in which the above described unique logic determination is employed is analyzed. In this figure, Fig. 18(A) represents the logic of the received remote-control signal; Fig. 18(B) represents the received remote-control signal; Fig. 18(C) represents a pulse signal which has been shaped into a pulse by the wave shaping circuit; Fig. 18(D) represents the envelope signal; and Fig. 18(E) represents a remote-control signal which has been reproduced.

In such case, since there is no carrier wave, the set-down timing corresponding to the logic "0" of the remote-control signal will not be detected and, therefore, the remote-control signal reproduced will be an erroneous one as shown in Fig. 18(E).

In the prior art memory remote control device in which the set-up timing of the remote-control signal is detected for the conversion into the data, there is a problem in that no remote-control signal can be faithfully reproduced where the remote-control signal has no carrier wave employing the unique logic determination in which the set-up and set-down timings of the pulse signal within the predetermined period T are deemed to be logic "1" and logic "0", respectively, such as employed in some European countries.

Also, generally in the learning remote control device, during a storage mode in which a remote-control signal from a remote control device to be learned (which device is hereinafter referred to as "to-be-learned remote control device" is to be stored, a key of the to-be-learned remote control device to be stored is manipulated, and the learning remote control device receive and analyzes the remote-control signal transmitted from the to-be-learned remote control device in correspondence with the above mentioned key for the temporary storage in the memory. Subsequently, the same key of the to-be-learned remote-control device is again manipulated, and the learning remote control compares the second received remote-control signal with the first received remote-control signal stored in the memory and finally stores the second received remote-control signal as a properly inputted signal in the event that the first and second received remote-control signals coincide with each other, thereby completing the storage.

Thus, in the prior art learning remote control device, the storage takes place when the first and second received remote-control signals coincide with each other and, therefore, it is necessary for a remote-control signal of identical code to be transmitted each time a key is manipulated.

For example, US 4,626,848 discloses a reconfigurable (i.e. learning) remote control device in which a coded signal to be learnt is sent at least twice from a remote controller to be emulated in order to make sure that it has been properly received and decoded. The received signal is a succession of signal portions comprising pulse bursts and pauses, and on each reception each such signal portion is categorised according to whether it is a pulse burst or a pause and according to the number of pulses in the burst and the duration in the pause. The categorisation codes for the successively received coded signals are compared in accordance with a correlation algorithm until a match of alternate encodings is established.

US 5,028,919 discloses a learning remote control device which can receive and learn a remote-control signal from a remote control device, in which the signal may be cyclic (i.e. it includes a prefix which changes each time the same control key is operated) or non-cyclic. The device has two reception modes. In a first mode, two successively received non-cyclic remote-control signals are compared for checking proper reception and demodulation, while in a second mode no such comparing is performed upon cyclic remote-control signals.

On the other hand, the remote-control signal employed in some European countries includes such a remote-control signal in which, each time a key is manipulated, a particular one bit varies, that is, the third bit from the beginning of a remote-control code varies in such a manner, 0, 1, 0, 1 ..., each time a key is manipulated, and such a remote-control signal in which particular two bits vary, that is the first and second bits from the beginning of the remote-control code vary in such a manner, 00, 01, 10, 11, 00, 01, 10, 11, 00 ... . Such a system is disclosed in Funkshau, Vol. 59, no. 26, Munich, DE, pages 67 to 71.

With those remote-control signals, since the code of the remote-control signal varies each time the key is manipulated, and therefore, in the prior art learning remote control device designed to store the signal when the first and second received remote-control signals coincide with each other, there is a problem in that no signal can be stored.

The present invention is concerned with the latter of the two above-mentioned problems in the prior art, and aims to provide an improved learning remote control device, and method of operation thereof, for learning a remote-control signal of a type in which a bit of a remote-control signal reverses each time a key is actuated, while still carrying out a useful comparison in relation to the remote-control signals received upon successive actuations of the same key of the to-be-learned remote control device.

According to the present invention there is provided a method of storing commands in a learning remote control device comprising the steps of:

i) receiving a first remote-control signal upon actuating a key of a to-be-learned remote control device;
ii) categorising the first remote-control signal into a first sequence of category data elements, each element of category data corresponding to a respective portion of the first remote-control signal;
iii) receiving a second remote-control signal upon reactuating said key of said to-be-learned remote control device;
iv) categorising the second remote-control signal into a second sequence of category data elements;

characterised by the steps:

v) generating a reversed category data sequence corresponding to said first remote-control signal in which a particular data bit has been reversed;
vi) determining whether said second sequence of category data elements corresponds to said reversed category data; and
vii) storing one of said sequences of category data elements in memory if it is determined that such correspondence exists.

According to the present invention there is also provided a learning remote control device for receiving a remote-control signal, categorising the remote-control signal into a sequence of category data elements, storing them in a memory and reproducing and transmitting the remote-control signal on the basis of the sequence of category data elements read from memory, said learning remote control device comprising:

storing means containing category data used for the categorisation of said remote-control signal; and

converting means for categorising the received remote-control signal in accordance with said category data into a sequence of category data elements;

characterised in that said learning remote control device is capable of receiving a said remote-control signal of a type in which a bit of a remote-control signal reverses each time a key is actuated, and further comprises:

a reversed category data sequence formulating means for formulating a reversed category data sequence corresponding to the remote-control signal in which a particular data bit has been reversed; and a comparing means for comparing a reversed category data sequence, corresponding to the remote-control signal received upon a first actuation of a key of a to-be-learned remote-control and a category data sequence corresponding to the remote-control signal received upon a second actuation of said key; wherein, when the reversed category data sequence corresponding to the first actuation of the key and the category data sequence corresponding to the second actuation of the key coincide with each other, one of the category data sequences is stored in memory in response to an output from the comparing means.

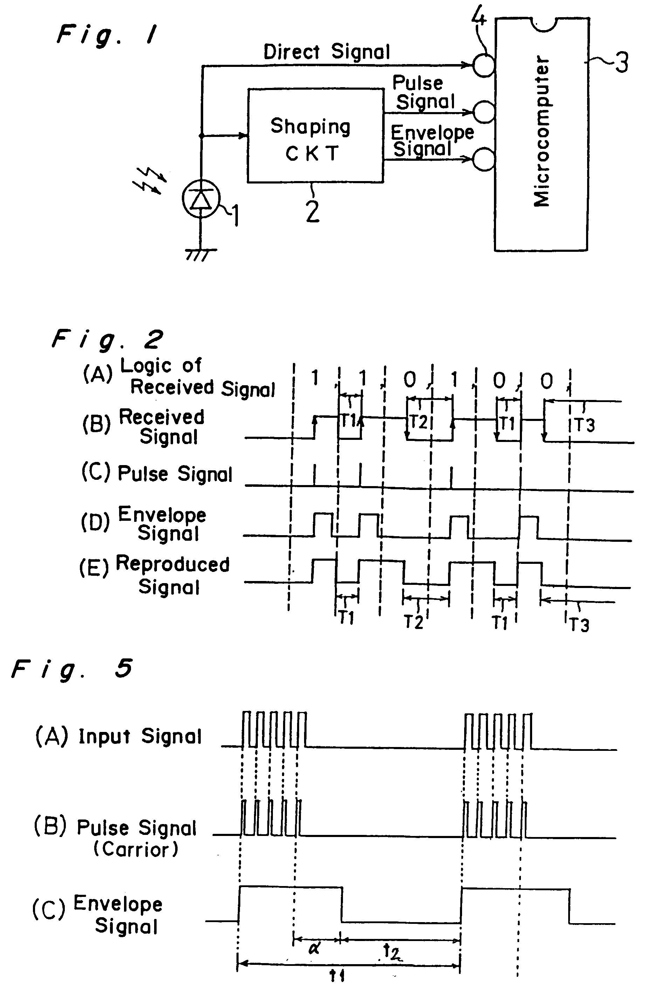

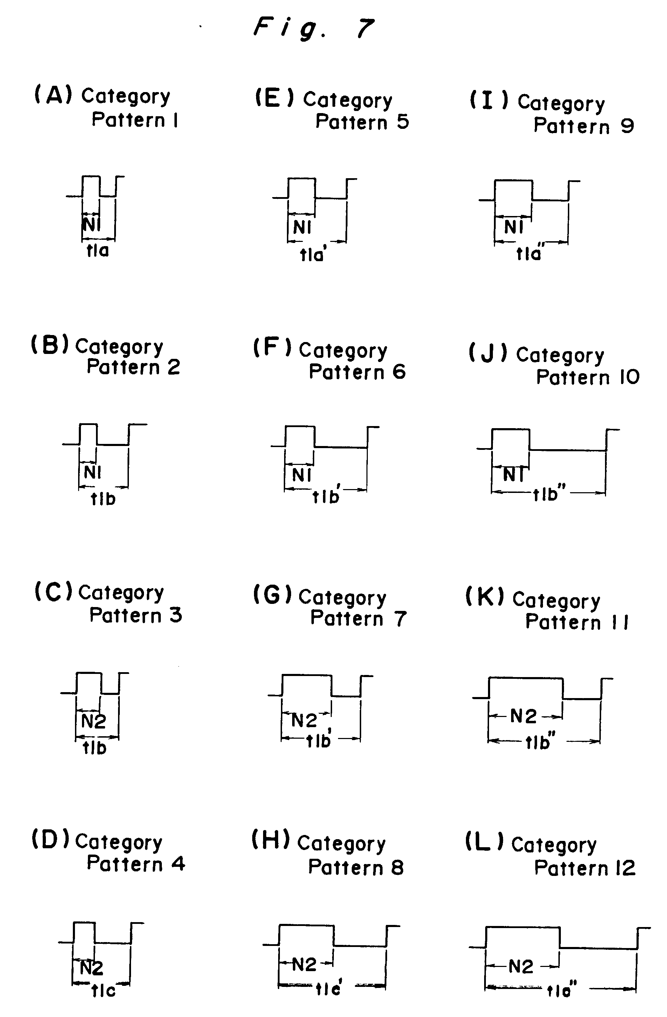

A preferred embodiment will be described later with reference to Figures 7 to 14 of the accompanying drawings. Before that, two other concepts developed by the inventors concerning learning remote control devices will be described as background with reference to Figures 1 to 6 of the drawings. In the drawings:

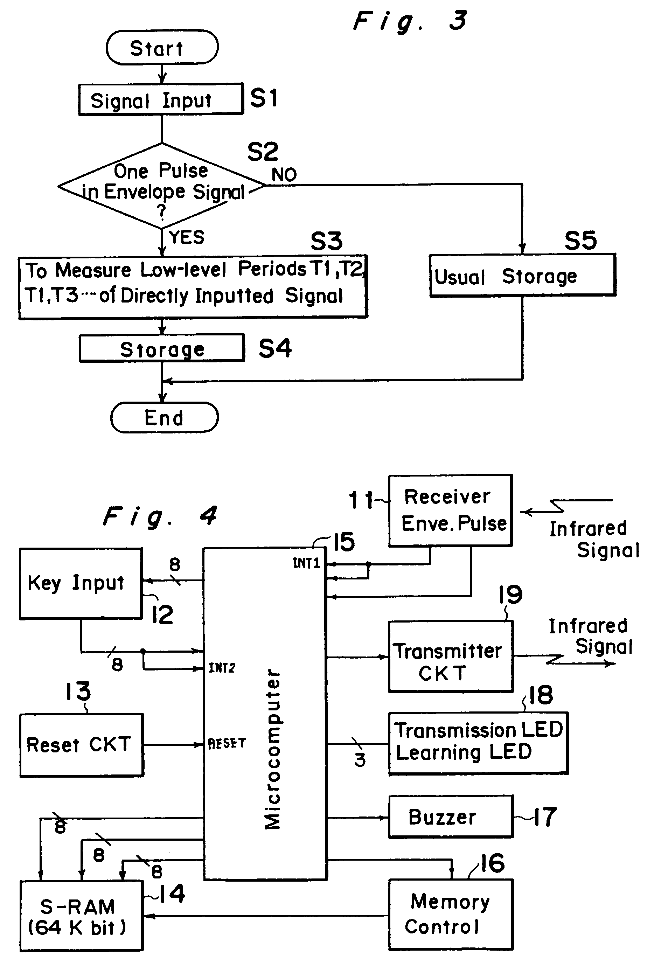

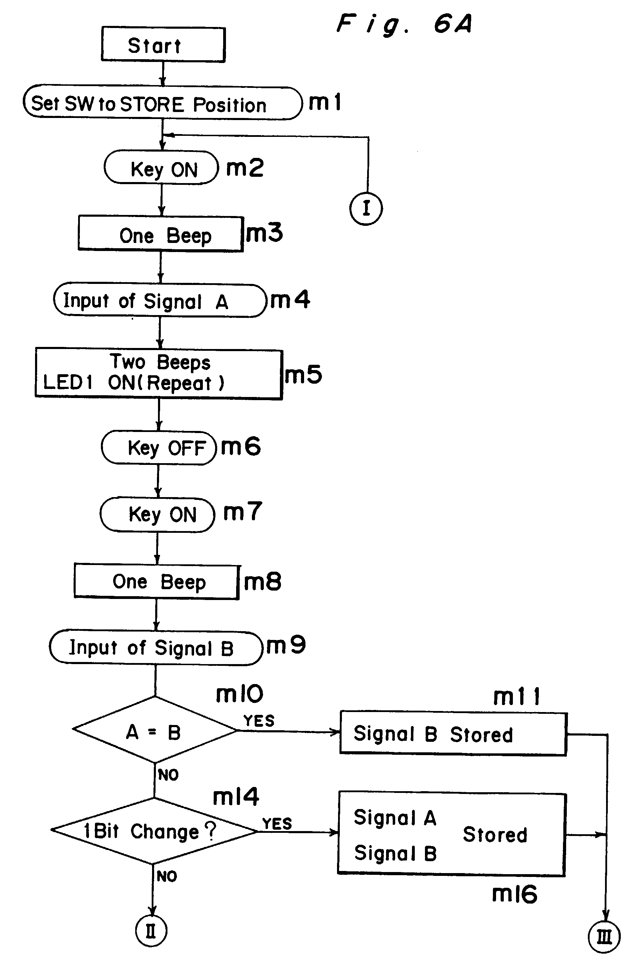

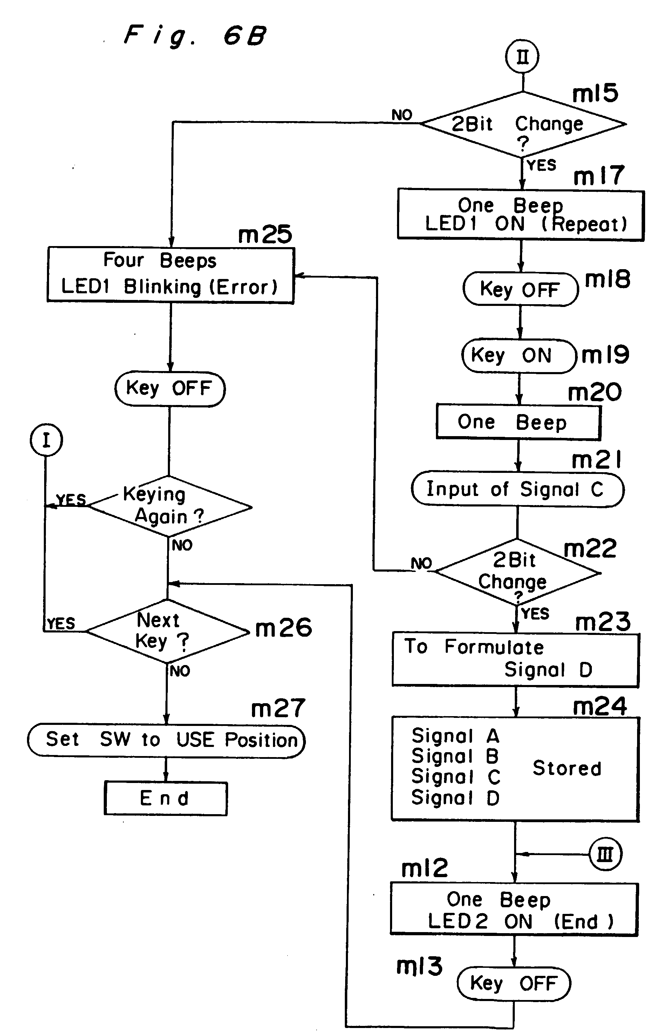

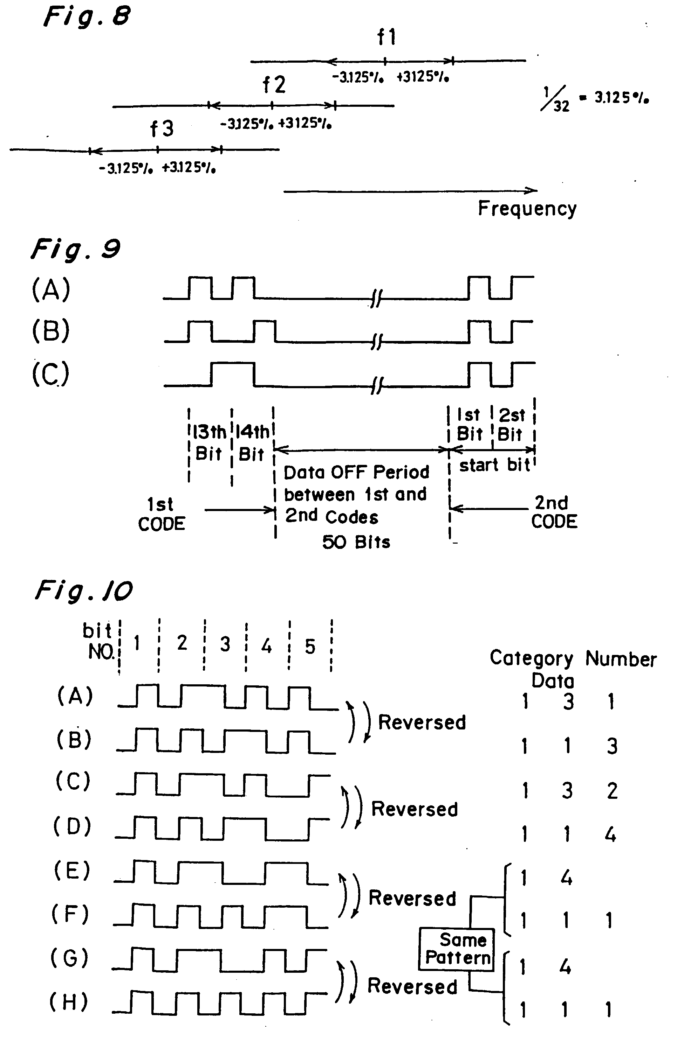

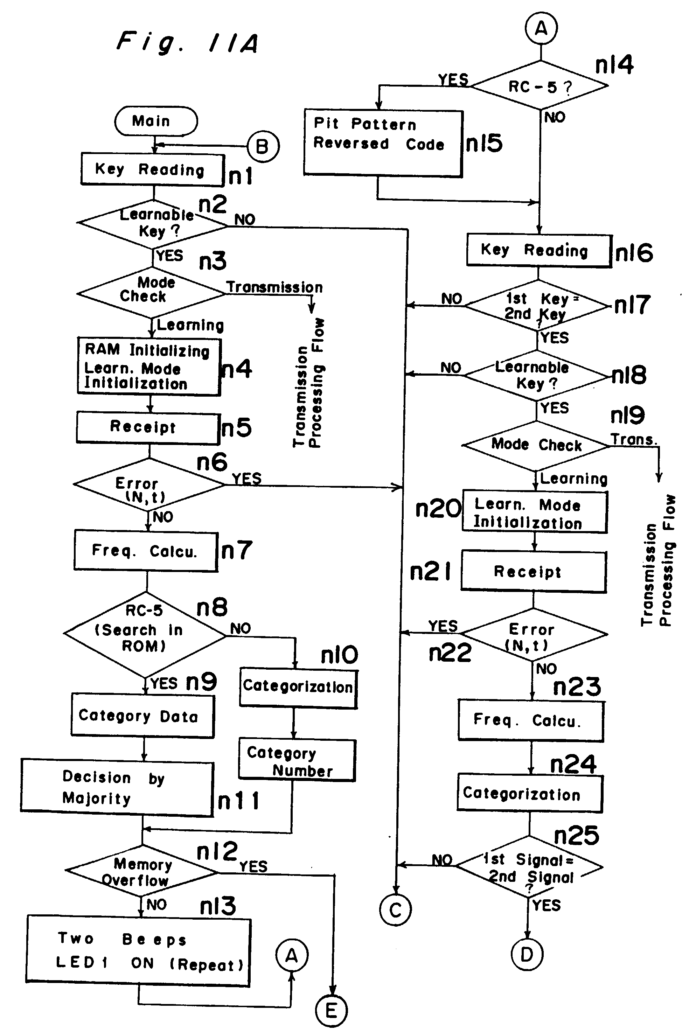

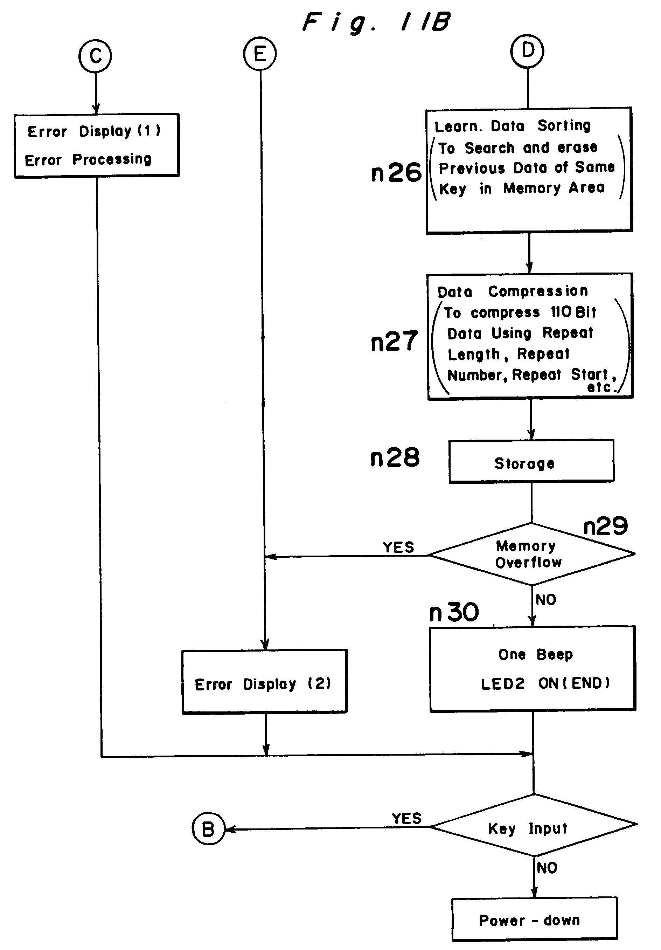

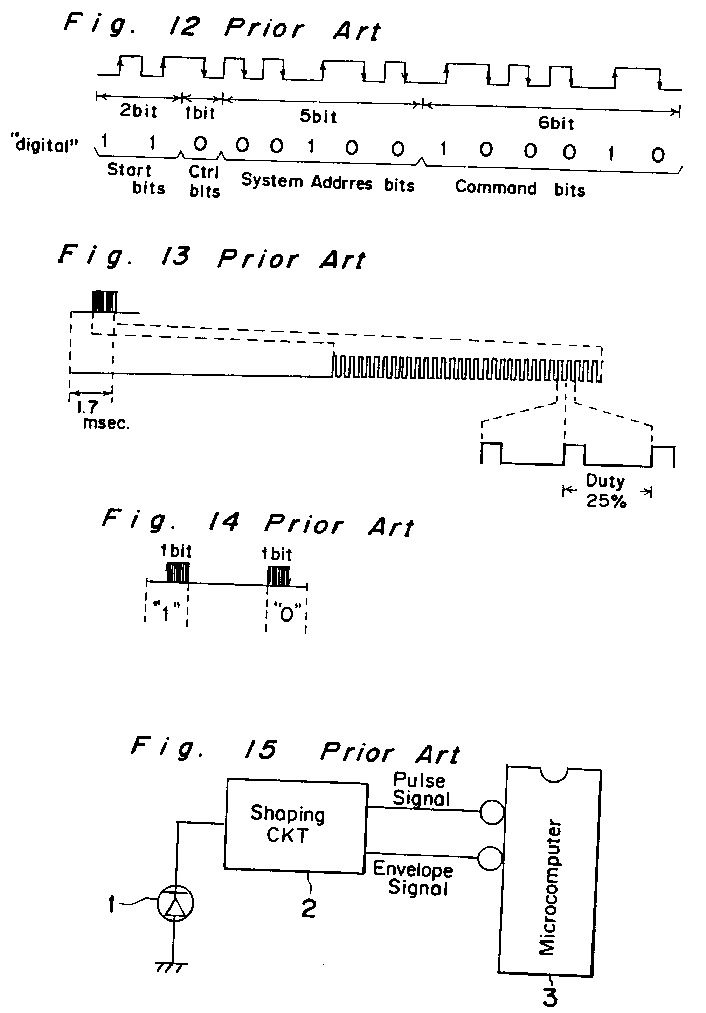

Fig. 1 is a schematic block circuit diagram showing the basic elements of a learning remote control device embodying one such background concept; Fig. 2 is a chart showing respective waveforms of various signals used to explain the operation of the system of Fig. 1; Fig. 3 is a flowchart showing the sequence of operation of the system of Fig. 1; Fig. 4 is a block circuit diagram showing the basic elements of a learning remote-control of a second device which can be operated according to the other such concept, and can also be operated as a preferred embodiment of the present invention; Fig. 5 is a chart showing respective waveforms of various signals used to explain the operation of the system of Fig. 4; Fig. 6, comprising Figs. 6A and 6B is a flowchart showing the sequence of operation of the system of Fig. 4, when operated according to the other such background concept; Fig. 7 is a diagram showing category number data; Fig. 8 is a diagram showing respective ranges of frequency of carrier waves; Figs. 9(A) to 9(c) are diagrams showing respective pause periods of codes; Figs. 10(A) to 10(H) are diagrams showing respective patterns corresponding to the reversal of control bits; Fig. 11 comprising Figs. 11A and 11B is a flowchart showing the sequence of operation of the system according to a preferred embodiment of the present invention; Fig. 12 is a diagram showing an RC-5 remote-controlled code; Fig. 13 is a diagram showing the structure of one bit of the remote-controlled code shown in Fig. 12; Fig. 14 is a diagram showing the determination of digital data; Fig. 15 is a schematic block circuit diagram showing the prior art remote control device; Fig. 16 is a diagram used to explain the determination of unique logic; and Figs. 17 and 18 are charts showing respective waveforms of various signals used to explain the operation of the prior art remote control device.

It is to be noted that like parts are designated by like reference numerals in the drawings.

A memory remote control device now to be described with reference to Figures 1 to 3 of the drawings is proposed by the inventors in order to overcome the problem discussed earlier, namely to provide faithful reproduction of a received remote-control signal which has no carrier wave. The idea underlying this device is not connected with the present invention, but the following description is given by way of background information.

Referring to Fig. 1, a memory remote control device comprises a photodiode 1 for receiving a remote-control signal, a wave shaping circuit 2 having an one-shot circuit built therein and to which the received remote-control signal is supplied for wave shaping to provide a pulse signal and an envelope signal as is the case with the prior art remote control device. Both of the pulse and envelope signals outputted from the wave shaping circuit 2 are supplied to a microcomputer 3 which is, as is the case with that in the prior art remote control device, operable to measure and calculate necessary data such as, for example, the frequency of a carrier wave of the received remote-control signal and to store them in a memory (not shown) and also operable to reproduce a remote-control signal on the basis of the data so stored in the memory.

For the purpose that the remote-control signal can be faithfully reproduced even in the case of the remote-control signal of a type having no carrier wave utilizable in the determination of a unique logic with which the set-up and set-down of a pulse signal within a predetermined period T are determined as "1" and "0", respectively, such as generally employed in some European countries, the memory remote control device is so designed as described hereinafter.

The microcomputer 3 includes an input port 4 to which the remote-control signal received by the photodiode 1 is supplied directly; a determining means for determining whether or not the received remote-control signal is a remote-control signal having no carrier wave utilizing the unique logic, that is, a remote-control signal of particular format, on the basis of a pulse signal and an envelope signal both outputted from the wave shaping circuit 2; a storing means operable to convert the remote-control signal into data and storing such data in the memory on the basis of the remote-control signal inputted to the input port 4 in the event that the determining means indicates that the received remote-control signal is the remote-control signal of particular format; and a reproducing means for reproducing the remote-control signal of particular format on the basis of the data stored in the memory.

The operation in which the memory remote control device of the above described construction analyzes the remote-control signal having no carrier wave utilizing the determination of the unique logic will now be described with particular reference to the waveforms of Fig. 2 and the flowchart of Fig. 3. Fig. 2(A) represents the logic of the received remote-control signal; Fig. 2(B) represents the received remote-control signal; Fig. 2(C) represents the pulse signal which has been shaped into a pulse by the wave shaping circuit 2; Fig. 2(D) represents the envelope signal; and Fig. 2(E) represents the remote-control signal which has been reproduced.

The wave shaping circuit having the one-shot circuit built therein outputs the pulse signal of predetermined pulse width as shown in Fig. 2(C) on the basis of the set-up of the remote-control signal received as shown in Fig. 2(B) and, also, the envelope signal which sets up in synchronism with the set-up of the pulse signal and sets down in the event that the pulse signal is not present during a predetermined period.

As hereinabove described, since the wave shaping circuit 2 detects the set-up of the received remote-control signal, the set-down corresponding to the logic "0" of the remote-control signal will not be detected.

Therefore, in the present device, as shown in the flowchart of Fig. 3, when and after the signals have been inputted at step S1, step S2 takes place at which a decision is made to determine if there is one pulse signal during a high level period of the envelope signal. Should the result of decision at step S2 indicate that the number of the pulse signals present during the high level period of the envelope signal is not one, that is, there is a plurality of pulse signals, it means that the received remote-control signal is not a remote-control signal of the particular format but is a remote-control signal having the carrier wave and, therefore, the program flow proceeds to step S5 at which a normal storing operation as in the case with the prior art takes place to store in the memory such data as the frequency of the carrier wave obtained on the basis of the pulse signal and the envelope signal, with the program flow subsequently terminating.

On the other hand, if the result of decision at step S2 indicates that there is only one pulse signal during the high level period of the envelope signal, it means that the received remote-control signsl is a remote-control signal of the particular format, that is, a remote-control signal having no carrier wave utilizing the unique logic determination and, therefore, the program flow proceeds to step S3 at which low level periods T1, T2, T1, T3, ... of the remote-control signal of the waveform of Fig. 2(B) inputted directly to the input port 4 of the microcomputer 3 and then to convert them into data. At subsequent step S4, the data directly measured from the remote-control signal are stored in the memory and, at the same time, data obtained on the basis of the envelope signal and the pulse signal as in the case with the prior art are stored in the memory, with the program flow subsequently terminating.

As hereinabove described, in the event of the remote-control signal of the particular format, the data are prepared on the basis of the remote-control signal inputted directly to the input port 4 of the microcomputer 3 and are then stored in the memory.

When it comes to a reproduction of a remote-control signal, as shown in Fig. 2(E), the remote-control signal is made to set down sequentially before each of the low level periods T1, T2, T1, T3, ... stored in the memory from the timing at which the remote-control signal is subsequently set up. In other words, while according to the prior art shown in Fig. 18 the remote-control signal is made to set down sequentially after a predetermined period β subsequent to the set-up of the remote-control signal, the set-down of the remote-controlled signal in the device now under discussion is sequentially made before each of the low level periods T1, T2, T1, T3, ..., stored in the memory from the timing at which the remote-control signal subsequently sets up.

In this way, as shown in Fig. 2(E), the reproduced remote-control signal corresponds faithfully to the received remote-control signal of the waveform of Fig. 2 (B) and, therefore, unlike the prior art system of Fig. 18, the set-down of the received signal can also be reproduced accurately.

Thus, since in the event of the remote-control signal of the particular format the remote-control signal is directly analyzed and converted into the data before it is stored in the memory and, on the basis of the data stored in the memory, the remote-control signal is subsequently reproduced, the remote-control signal of the particular format which has hitherto been unable to be reproduced according to the prior art system wherein the remote-control signal is converted into the data on the basis of only the envelope and pulse signals can be advantageously faithfully reproduced.

Figures 4 to 6 illustrate another device proposed by the inventors and now to be described by way of background information. This device is not in accordance with the present invention, though it is concerned with a problem which is allied to that addressed by the present invention and which also arises in the case that the remote-control signal received from the to-be-learned remote control device is of the type wherein the code of a particular bit or bits changes each time the same key is manipulated.

Referring now to Fig. 4 showing a block circuit diagram of this further learning remote control device, reference numeral 11 represents a receiving circuit for receiving an infrared remote-control signal emitted from a to-be-learned remote control device (not shown) and for outputting it to a microcomputer 15 after the waveform thereof has been shaped; reference numeral 12 represents a key input unit; reference numeral 13 represents a reset circuit; reference numeral 14 represents a static random access memory (S-RAM) for the storage of data processed by the microcomputer 15; reference numeral 16 represents a memory control circuit for controlling writing and reading operations relative to the static random access memory 14; reference numerals 17 and 18 represent a buzzer and a LED (light emitting diode) display for providing an operator with audio and visual indications as to operating procedures when the remote-control signal from the to-be-learned remote control device is to be stored in a manner as will be described later, respectively; and reference numeral 19 represents a transmitting circuit, including a light emitting diode and a drive circuit therefor, for transmitting the remote-control signal stored.

When, for example, the remote-control signal of the waveform shown in Fig. 5(A) is inputted to the receiving circuit 11, the receiving circuit 11 outputs to the microcomputer 15 both of a pulse signal of the waveform of Fig. 5(B), which is an output from a mono-stable multivibrator triggered in response to a set-up edge of the inputted signal, and an envelope signal of the waveform of Fig. 5(C) which, in the event that the interval of the pulse signal expands to a value larger than a predetermined period $\alpha$, sets down after the predetermined period $\alpha$ subsequent to the set-up edge of the final pulse of the continuous pulse signal and sets up in response to a set-up edge of the next succeeding pulse signal.

The microcomputer 15 which has a capability of functioning as a determining means as will be described later is operable to calculate, according to the following equation, for example, the frequency f of a carrier wave of the received remote-control signal on the basis of both of the pulse and envelope signals.

$$f = (N - 1)/[t1 - (t2 + \alpha)]$$

wherein t1 represents a period between the initial set-up of the envelope signal to the next succeeding set-up of the envelope signal, t2 represents a period from the set-down of the envelope signal to the next succeeding set up of the envelope signal and N represents the number of pulse signals present during the period t1.

In this way, the microcomputer 15 causes the received remote-control signal to be converted into data, in a manner similar to that in the prior art, on the basis of the pulse signal and the envelope signal, which data are subsequently stored in the static random access memory 14.

In order for the learning remote control device to be able to learn not only all forths of the remote-control signal, in which the code of particular bit varies each time a key is manipulated, such as generally utilized in some European countries, but also the usual remote-control signal in which there is no such code variation, the learning remote control device now under discussion is so designed as follows.

The learning remote control device comprises a determining means operable, during a storing mode and in the event that a remote-control signal received in correspondence with a first key manipulation of the to-be-learned remote control device and a remote-control signal received in correspondence with a second key manipulation thereof does not coincide with each other, to refer to respective codes of these two remote-control signals to determine whether or not it is a remote-control signal of a format wherein the code of a particular bit varies each time the key is operated, so that, in the event that the received remote-control signal is a remote-control signal of the format wherein the code of particular bit varies, the remote-control signal corresponding to such format can be stored in the static random access memory 14.

The operation which takes place during the storing mode will now be described with particular reference to the flowchart of Fig. 6 comprised of Figs. 6A and 6B.

At the outset, an infrared light emitting window of the to-be-learned remote control device and an infrared light receiving window of the learning remote control device now under discussion are to be positioned in face-to-face relationship so that the remote-control signal in the form of an infrared light can be inputted from the to-be-learned remote control device to the learning remote control device before the storing operation is initiated.

Thereafter, in order to set the learning remote control device in the storing mode, a USE/STORE switch is to be set at a STORE position at step ml and, then, one of keys of the learning remote control device which is desired to be stored at is manipulated at step m2. Consequent upon the manipulation of such one of the keys, a single electronic beep is generated at step m3 to indicate that the learning remote control device is in a position ready to receive the remote-control signal.

By the manipulation of the key of the to-be-learned remote control device desired to be stored at, a first remote-control signal A is inputted at step m4 and, after this remote-control signal A has been converted into a data, two electronic beeps are generated along with the lighting of a light emitting diode (LED) at step m5 to indicate that the first process has been completed and the next succeeding input operation is invited. Then, the manipulation of the key of both of the to-be-learned remote control device and that of the learning remote control device is released for the time to come at step m6.

By manipulating again the same key of the learning remote control device at step m7, a single electronic beep is generated at step m8 to indicate that the learning remote control device is in a position ready to receive the remote-control signal. By manipulating again the same key of the to-be-learned remote control device as that of the learning remote control device, a second remote-control signal B can be inputted at step m9.

Thereafter, at step m10, the first and second remote-control signals A and B are compared to determine if they coincide with each other. If they coincide with each other, it means that the remote-control signal is of a type wherein no code of a particular bit varies each time the key is manipulated, that is, the generally utilized remote-control signal, and therefore, the remote-control signal B is stored at step m11, followed by step m12 at which a single electronic beep is generated along with the lighting of a light emitting diode to indicate that the storage has been completed, thereby releasing the key manipulation at step m13.

The foregoing operation for storing the generally utilized remote-control signal as described above is substantially identical with that occurring in the prior art learning remote control device.

However, in the event that the first and second remote-control signals A and B do not coincide with each other as determined at step m10, respective codes of these first and second remote-control signals A and B are referred to and a respective decision is made successively at step m14 and m15 to determine if the remote-control signal is of a type wherein the code of particular one bit varies or of a type wherein the code of particular two bits varies.

Where the remote-control signal is of the type wherein the code of particular one bit varies as determined at step m14, both of the first and second remote-control signals A and B are stored at step m16, followed by step m12 at which the electronic beep is generated along with the lighting of the light emitting diode to indicate that the storage has been completed, thereby releasing the key manipulation at step m13.

On the other hand, where the remote-control signal is of the type wherein the code of particular two bits varies as determined at step m15, two electronic beeps are generated along with the lighting of a light emitting diode at step m17 to invite that the input operation is to be repeated. In this way, by temporarily releasing a key manipulation at step m18 and by manipulating again the same key of the learning remote control device which is desired to be stored at at step m19, an electronic beep can be outputted at step m20 to indicate that the learning remote control device is in a position ready to receive the remote-control signal. By manipulating the same key of the to-be-learned remote control device as that of the learning remote control device again, a third remote-control signal C can be inputted at step m21.

Then, a decision is again made at step m22 in reference to the first, second and third remote-control signals A, B and C to determine if they are of a type wherein the particular two bits have changed. If the result of decision at step m22 indicates that they are of the type wherein the particular two bits have changed, a remote-control signal D to be outputted the fourth time subsequent to the third remote-control signal C is prepared at step m23. In other words, since the remote-control signal of the type wherein the particular two bits vary is such that, as hereinbefore described, the first and second bits of the remote-control signal vary regularly in a manner of 00, 01, 10, 11, 00, 01, 10, 11, 00, ..., the remote-control signal D to be outputted the fourth time can be readily determined from the first to third remote-control signals so received and, therefore, the remote-control signal D to be outputted the fourth time is prepared.

The remote-control signal D so prepared and the first to third remote-control signals A, B and C are then stored at step m 24, followed by step m12 at which the electronic beep is generated along with the lighting of the light emitting diode to indicate that the storage has been completed, thereby releasing the key manipulation at step m13.

On the other hand, where the result of decision at step m22 indicates that they are not of a type wherein the particular two bits have changed, four electronic beeps are generated along with the blinking of the light emitting diode at step m25 to indicate to the operator that an error has occurred and, therefore, the key manipulation should be effected again.

The foregoing procedure is to be repeated for each of keys desired to be stored at step m26, followed by the termination of the storing operation. Thereafter, the USE/STORE switch in the learning remote control device should be shifted to a USE position at step m27.

As hereinbefore described, during the storing mode, the remote-control signal received in correspondence with the first manipulation of the key of the to-be-learned remote control device and the remote-control signal received in correspondence with the second manipulation of the key of the to-be-learned remote control device are compared and, in the event that the both coincide with each other, the remote-control signals thereof are stored as is the case with that occurring in the prior art system, but in the event that the both do not coincide with each other, the respective codes of those remote-control signals are referred to so that the decision can be made to determine if they are of the type wherein the code of a particular bit varies each time the key is manipulated. If they are of such type, the remote-control signal corresponding to such type is stored. Accordingly, not only can the generally used remote-control signal be stored as is the case with the prior art system, but the remote-control signal of the type wherein the code of particular bit varies, such as employed in some European countries, can also be stored.

It is to be noted that the remote-control signal once stored can be reproduced and transmitted in a manner similar to those in the prior art system. In such case, where the remote-control signal is of the type wherein the code of particular bit varies, the remote-control signal wherein the code of particular bit varies is reproduced and transmitted each time the key is manipulated. In other words, in the foregoing device with the remote-control signal of the type wherein the code of particular one bit varies, the remote-controlled signals A and B are alternately transmitted each time the key is manipulated, but with the remote-control signal of the type wherein the code of particular two bits varies, the remote-controlled signals A, B, C and D are successively and cyclically transmitted each time the key is manipulated.

It is also to be noted that, in the foregoing device in the case of the remote-control signal of the type wherein the code of particular two bits varies, the accurate decision has been described as taking place upon receipt of the third remote-control signal. However, arrangement may be made that the decision can be made upon receipt of only the second remote-control signal or upon receipt of the fourth remote-control signal.

Thus, in the above device, the first received remote-control signal from the to-be-learned remote control device and the second received remote-control signal are compared and, in the event that the both coincide with each other, the remote-control signals thereof are stored as is the case with that occurring in the prior art system, but in the event that they do not coincide with each other, the respective codes of those remote-control signals are referred to so that the decision can be made to determine if they are of the type wherein the code of particular bit varies each time the key is manipulated. If they are of such type, the remote-control signal corresponding to such type is stored. Accordingly, it is possible to learn not only the generally used remote-controlled signal but also the remote-control signal of the type wherein the code of particular bit varies.

The learning remote control device according to a preferred embodiment of the present invention which will now be described and the waveforms of various signals used to explain the operation thereof are identical with those shown in Figs. 4 and 5 in connection with the previously described device respectively. Accordingly, for the sake of brevity, such details of the learning remote control device according to the preferred embodiment of the present invention and the operation thereof will not be reiterated.

However, according to the preferred embodiment of the present invention, the storing mode executed by the learning remote control device is performed in a manner as shown in the flowchart shown in Fig. 11 which will be described later. The learning remote control device according to the preferred embodiment of the present invention is so designed as to generate a so-called RC-5 remote-control signal such as employed in some European countries, that is, the remote-control signal of a type wherein one particular bit varies each time the remote control device is manipulated, namely, of a type wherein the third bit from the beginning of the remote control code varies in such a manner, 0, 1, 0, 1, ..., each time the key is manipulated.

Fig. 12 illustrate the remote control code of the RC-5 signal. This remote control code consists of 14 bits, namely, two start bits, one control bit, five system address bits and six command bits, each of said bits including 32 pulses of 25% in duty ratio and of about 1.7 msec in cycle as shown in Fig. 13.

Also, as shown in Fig. 14, the set-up at the center of each bit and the set-down at the center of each bit correspond respectively to logic levels of "1" and "0".

In this type of remote control code, the first two bits, that is, the start bits, are set to be "1", and the next succeeding control bit, which is called "reversed bit", is of a type which may reverse in logic level state between "0" and "1" each time the same key in a remote-controlling transmitter is manipulated.

In order for the remote-control signal of the type wherein the code of a particular bit reverses each time the key is manipulated as hereinbefore described, that is, the so-called RC-5 signal, to be learned, the learning remote control device according to the preferred embodiment is so designed as follows.

In other words, arrangement has been made that the RC-5 signal shown in Fig. 12 is categorized into a plurality of category data for two or three bits so that it can be stored as a category number data (number of the category).

These category data are understood in the form as patterned and are basically available in four kinds as shown in Figs. 7(A) to 7(D), and the 14-bit remote-control signal shown in Fig. 12 can be recognized as a combination of the four category patterns 1 to 4.

Each of the four category patterns 1 to 4 can be defined by the previously described period t1 (the period from the initial set-up timing to the next succeeding set-up timing of the envelope signal) and the pulse number N (the number of pulse signals present within the period t1).

The four category patterns 1 to 4 shown in Figs. 7(A) to 7(D), respectively, have their pulse number N and period t1 indicated by N1, t1a; N1, t1b; N2, t1b; and N2, t1c, respectively.

As described with reference to Fig. 13, the pulse numbers N1 and N2 are 32 and 64, respectively, and each of the periods t1a, t1b and t1c is a period defined in correspondence with the carrier frequency of the remote-control signal.

The carrier frequency referred to above varies with the type of the remote-controlling transmitter and may possibly extend to a wide frequency range and, therefore, in the preferred embodiment of the present invention, the category patterns are divided into 12 types (4 x 3 = 12) as shown in Figs. 7(A) to 7(L) so that, as shown in Fig. 8, the remote-control signals of three groups of carrier frequencies f1, f3 and f3 can be classified.

Thus, the above described category patterns 1 to 4 correspond to the carrier frequency f1 shown in Fig. 8; the category patterns 5 to 8 correspond to the carrier frequency f2 shown in Fig. 8; and the category patterns 9 to 12 correspond to the carrier frequency f3.

Accordingly, the RC-5 signal of the carrier frequency shown in Fig. 8 can be recognized as a combination of the four category patterns of any one of the three carrier frequency groups depending on particular respective values of the period tl and the pulse number N possessed by the remote-control signal. In other words, the remote-control signal received may take one of the three combinations of the category patterns 1 to 4, the category patterns 5 to 8 and the category patterns 9 to 12.

In order to classify the received remote-control signal into one of the 12 category patterns 1 to 12, the microcomputer used in the practice of the preferred embodiment of the present invention employs a read-only memory (ROM storing means) in which data of the period tl and the pulse number N which provide the basis for the classification of the received remote-control signal into one of the 12 category patterns are stored. In practice, since the period tl is affected by the carrier frequency, the period tl in the practice of the preferred embodiment of the present invention is given an allowance of about 3.125% (= 1/32) and, therefore, depending on the carrier frequency, there may be a possibility that the received remote-control signal may be classified to two carrier frequency groups. In such case, a decision by majority is employed to classify the received remote-control signal to the majority carrier frequency group.

As hereinabove described, the received remote-control-signal can be classified by the microcomputer having a function of a converting means into a sequence of patterns each comprising one of the 12 category patterns and then converted into a sequence of category data element each corresponding to a respective one of the patterns, and each comprising a category number identifying the category pattern.

It is to be noted that, so long as the same key is manipulated, the same code can be outputted after a predetermined pause period. However, as shown in Fig. 9, by categorizing a pause period between the previous code and the subsequent code to one of category patterns in a manner similar to that described hereinabove, it can be stored as a category number data.

In the case of the RC-5 signal, since the code of particular bit reverses each time the key is manipulated, the category number data obtained by converting the remote-control signal resulting from the first key manipulation may not coincide with the category number data obtained by converting the remote-controlled signal resulting from the second key manipulation. In view of this, in the preferred embodiment of the present invention, the following arrangement has been made so as to cope with the reversal of the control bit of the RC-5 signal.

Fig. 10 illustrates the start bits, the control bit and a portion of the system address bits, as well as the category number data (category numbers) classified to the above described category patterns. Fig. 10 also illustrate the patterns necessary to make the above described category number data in correspondence with the reversal of the control bit. Since (E), (F) and (G), (H) shown in Fig. 10 take the same patterns, respectively, it will readily be understood that the six patterns (A) to (F) shown in Fig. 10 would suffice.

By way of example, where the category number data represent 1, 3, 1 as shown in Fig. 10(A), the reversed category number data in the event of the reversal of the control bit may represent 1, 1, 3 as shown in Fig. 10(B). Similarly, where the category number data represent 1, 3, 2 as shown in Fig. 10(C), the reversed category number data in the event of the reversal of the control bit may represent 1, 1, 4 as shown in Fig. 10(D).

Accordingly, once the category number data of the remote-control signal resulting from the first manipulation of the key is given, the reversed category number data in which the control bit has been reversed as a result of the second manipulation of the key can be determined.

In view of the foregoing, the microcomputer 15 which acts as a reversed category number data formulating means according to the patterns can formulate the reversed category number data, in which the control bit has been reversed, on the basis of the category number data of the remote-control signal resulting from the first key manipulation.

It is to be noted that the category number data following the category number data shown in Fig. 10 remain the same even if the control bit is reversed.

Also, the microcomputer 15, during the storing mode during which the storing operation takes place for storing the remote-control signal, compares the reversed category number data, in which the particular bit of the remote-control signal has been reversed as a result of the first key manipulation, with the category number data of the remote-control signal resulting from the second key manipulation and stores it in the static random access memory 14 in the event that both category number data coincide with each other.

When the remote-control signal is to be reproduced, the category number data are read out from the static random access memory 14 and, after having processed in a manner substantially reverse to that described hereinabove in connection with the categorizing process, the remote-control signal is reproduced and then transmitted.

Thus, the learning remote control device according to the preferred embodiment of the present invention makes use of the microcomputer 15 having respective functions of a storage means in which the category data providing the basis for the conversion of the remote-control signal into the category number data; a converting means for categorizing the received remote-control signal according to the category data in the storage means to provide category number data; a reversed category number data formulating means for formulating the reversed category number data, wherein the particular bit of the category number data has been reversed, on the basis of the category number data which have been converted by the converting means; and a comparing means for comparing the reversed category number data, corresponding to the remote-control signal received in correspondence with the first manipulation of a key during the storage mode in which the remote-control signal can be stored, and the category number data, corresponding to the remote-control signal received in correspondence with the second manipulation of a key, with each other. This microcomputer 15 is operable in such a manner that, when the reversed category number data corresponding to the first manipulation of the key and the category number data corresponding to the second manipulation of the key coincide with each other, the category number data can be stored in the static random access memory in response to an output from the comparing means.

The operation which takes place during the storing mode will now be described with reference to the flowchart shown in Fig. 11 comprised of Figs. 11A and 11B.

Referring to Fig. 11 and at step n1, the key of the learning remote control device which has been manipulated is read and, at subsequent step n2, a decision is made to determine if the key is a learnable key. If the result of decision at step n2 indicates the learnable key, a mode check takes place at step n3 and, in the event that the result of the mode check indicates the storing mode, the program flow proceeds to step n4 at which the random access memory is initialized, followed by step n5 at which a receiving process takes place. Then at step n6, a decision is made to determine if an error has occurred during the receiving process and, in the event that the result of decision at stem n6 indicates that no error has occurred, the program flow proceeds to step n7 at which the carrier frequency is calculated, followed by step n8.

At step n8, a decision is made to determine if the received remote-control signal is an RC-5 signal. In other words, a decision is made to determine if it can be classified according to the category data stored in the storage means and, if it is possible to classify, it means that the received remote-control signal is the RC-5 signal and, therefore, the program flow proceeds to step n9, but if it is not possible to classify, it means that the received remote-control signal is not the RC-5 signal, but the generally used remote-control signal, and, therefore, the program flow proceeds to step n10 at which the categorization takes place in a manner similar to that effected with the generally used remote-control signal according to the prior art system.

At step n9, the remote-control signal is converted to provide the corresponding category number data, followed by step n11 at which, based on the decision by majority, the carrier frequency group is unified. Then at step n12, a decision is made to determine if an overflow takes place in the memory. If no overflow takes place in the memory, the program flow proceeds to step n13 at which a first processing terminates and an indicating sound requesting that the key should be manipulated again is outputted along with the lighting of a light emitting diode, followed by step n14. At step n14, a decision is made to determine if the first received remote-control signal is an RC-5 signal and, in the event that the result of decision at step n14 indicates the RC-5 signal, the program flow proceeds to step n15 at which the category number data is recognized and, based on this recognized category number data, the reversed category number data are formulated, followed by step n16. However, if the result of decision at step n14 indicates that the first received remote-control signal is not the RC-5 signal, the program flow proceeds directly to step n16.

At step n16, the key of the learning remote control device which has been manipulated subsequently is read and, at subsequent step n17, a decision is made to determine if the first manipulated key is identical with the second manipulated key. If they are the same, the program flow proceeds to step n18 at which a decision is made to determine if it is a learnable key. Should the result of decision at step n18 indicates that the key is the learnable key, step n19 takes place at which a mode check is carried out. In the event that the result of the mode check at step n19 indicates the storing mode, the program flow proceeds to step n20 at which the random access memory is initialized, followed by step n21 at which a receiving process takes place. Then, at step n22, a decision is made to determine if an error has occurred during the receiving process and, in the event that no error has occurred, the program flow proceeds to step n23 at which the carrier frequency is calculated, followed by step n24.

At step n24, and in the event that the received remote-control signal is the RC-5 signal, it is converted into the category number data as is the case with the first conversion, but in the event that it is not the RC-5 signal, the categorization takes place in a manner similar to that according to the prior art system, followed by step n25. At step n25, a decision is made to determine if, in the case of the first received signal, that is, in the case of the RC-5 signal, the reversed category number data and the category number data of the second received signal are compared and, if the both coincide with each other, step n26 takes place at which the previous data of the same key number in a memory area is erased. At subsequent step n27, actual one data is detected from the remote-control signal received repeatedly and continuously from a counter party and, using such data as the repeat start, the repeat length and the repeat number, the data are compressed, followed by step n28 at which they are stored in the memory. Then, at step n29, a decision is made to determine if an overflow occurs in the memory and, in the event that no overflow occur, the program flow proceeds to step n30 at which an electronic beep is generated along with the lighting of a light emitting diode to indicate that the storing operation has been completed.

As hereinbefore described, in the case of the RC-5 remote-control signal, it is converted into the category number data and, based on this category number data, the reversed category number data in which the control bit has been reversed are formulated. Then, if this reversed category number data coincide with the category number data of the second received remote-control signal, such category number data are stored in the static random access memory. Accordingly, even the RC-5 remote-control signal can be learned.

Thus, according to the preferred embodiment of the present invention, the received remote-control signal can be categorized into the plurality of the category data to provide the respective category number data for the required number of bits and, on the basis of the category number data, the reversed category number data corresponding to the remote-control signal wherein the particular bit of the remote-control signal is reversed are formulated. The reversed category number data corresponding to the first manipulation of the key during the storage mode and the category number data corresponding to the second manipulation of the key are then compared and, in the event that the both coincide with each other, the category number data can be stored in the memory. Therefore, each time the key of the remote control device is manipulated, the remote-control signal in which the code of particular bit varies can be stored

Although the present invention has been described in connection with the preferred embodiment thereof with reference to the accompanying drawings, it is to be noted that various changes and modifications within the scope of the appendant claims are apparent to those skilled in the art.

**Claims**

1. A method of storing commands in a learning remote control device comprising the steps of:

    i) receiving (n5) a first remote-control signal upon actuating a key of a to-be-learned remote control device;
    ii) categorising (n9) the first remote-control signal into a first sequence of category data elements, each element of category data corresponding to a respective portion of the first remote-control signal;
    iii) receiving (n21) a second remote-control signal upon reactuating said key of said to-be-learned remote control device;
    iv) categorising (n24) the second remote-control signal into a second sequence of category data elements;

    characterised by the steps:

    v) generating (n15) a reversed category data sequence corresponding to said first remote-control signal in which a particular data bit has been reversed;
    vi) determining (n25) whether said second sequence of category data elements corresponds to said reversed category data; and
    vii) storing (n28) one of said sequences of category data elements in memory if it is determined that such correspondence exists.

2. A method as claimed in claim 1 further comprising the step of determining (n8) whether said first remote-control signal is of a particular type in which a particular data bit reverses each time a key is actuated, wherein if said first remote-control signal is not of such a type step v) is omitted and said first and second sequences of category data are compared in step vi) to determine whether said first and second sequences correspond.

3. A method as claimed in claim 1 or claim 2 wherein the sequence of category data stored in step vii) is compressed (n27) before storage.

4. A method as claimed in any one of the preceding claims wherein the category data elements used to form each sequence of category data for said signal of a particular type have been previously stored in memory.

5. A learning remote control device for receiving a remote-control signal, categorising the remote-control signal into a sequence of category data elements, storing them in a memory (14) and reproducing and transmitting the remote-control signal on the basis of the sequence of category data elements read from memory, said learning remote control device comprising:

    storing means (15) containing category data used for the categorisation (n9,n10,n24) of said remote-control signal; and
    converting means (15) for categorising the received remote-control signal in accordance with said category data into a sequence of category data elements (Fig. 10);

    characterised in that said learning remote control device is capable of receiving a said remote-control signal (Fig. 12) of a type in which a bit of a remote-control signal reverses each time a key is actuated, and further comprises:

    a reversed category data sequence formulating means (15) for formulating (n15) a reversed category data sequence corresponding to the remote-control signal in which a particular data bit has been reversed; and

a comparing means (15) for comparing (n25) a reversed category data sequence, corresponding to the remote-control signal received upon a first actuation of a key of a to-be-learned remote-control and a category data sequence corresponding to the remote-control signal received upon a second actuation of said key; wherein, when the reversed category data sequence corresponding to the first actuation of the key and the category data sequence corresponding to the second actuation of the key coincide with each other, one of the category data sequences is stored (n28) in memory in response to an output from the comparing means.

**Patentansprüche**

1.  Verfahren zum Einspeichern von Befehlen in eine lernende Fernsteuervorrichtung, mit den folgenden Schritten:

    i) Empfangen (n5) eines ersten Fernsteuersignals beim Aktivieren einer Taste einer zu unterrichtenden Fernsteuervorrichtung;
    ii) Kategorisieren (n9) des ersten Fernsteuersignals in eine erste Folge von Kategoriedatenelementen, von denen jedes einem jeweiligen Teil des ersten Fernsteuersignals entspricht;
    iii) Empfangen (n21) eines zweiten Fernsteuersignals beim Wiederaktivieren der Taste der zu unterrichtenden Fernsteuervorrichtung;
    iv) Kategorisieren (n24) des zweiten Fernsteuersignals in eine zweite Folge von Kategoriedatenelementen;

    **gekennzeichnet durch** die folgenden Schritte:

    v) Erzeugen (n15) einer umgekehrten Kategoriedatenfolge entsprechend dem ersten Fernsteuersignal, in der ein spezielles Datenbit umgekehrt ist;
    vi) Ermitteln (n25), ob die zweite Folge von Kategoriedatenelementen den umgekehrten Kategoriedaten entspricht; und
    vii) Einspeichern (n28) einer der Folgen von Kategoriedatenelementen in einen Speicher, wenn ermittelt wurde, daß eine solche Entsprechung besteht.

2.  Verfahren nach Anspruch 1, ferner mit dem Schritt des Ermittelns (n8), ob das erste Fernsteuersignal einen speziellen Typ aufweist, in dem ein spezielles Datenbit jedesmal dann umgekehrt wird, wenn eine Taste betätigt wird, wobei dann, wenn das erste Fernsteuersignal nicht von einem solchen Typ ist, der Schritt v) weggelassen wird, und die erste und zweite Folge von Kategoriedaten im Schritt vi) verglichen werden, um zu ermitteln, ob die erste und zweite Folge übereinstimmen.

3.  Verfahren nach Anspruch 1 oder Anspruch 2, bei dem die im Schritt vii) abgespeicherte Folge von Kategoriedaten vor dem Abspeichern komprimiert (n27) wird.

4.  Verfahren nach einem der vorstehenden Ansprüche, bei dem die zum Erzeugen jeder Folge von Kategoriedaten für das Signal von speziellem Typ verwendeten Kategoriedatenelemente zuvor im Speicher abgespeichert wurden.

5.  Lernende Fernsteuervorrichtung, die ein Fernsteuersignal empfangen soll, das Fernsteuersignal in eine Folge von Kategoriedatenelementen kategorisieren soll, diese in einen Speicher (14) einspeichern soll und das Fernsteuersignal auf Grundlage der aus dem Speicher ausgelesenen Folge von Kategoriedatenelementen wiedererstellen und übertragen soll, die folgendes aufweist:

    -   eine Speichereinrichtung (15), die zur Kategorisierung (n9, n10, n24) des Fernsteuersignals verwendete Kategoriedaten enthält; und
    -   eine Umsetzeinrichtung (15) zum Kategorisieren des empfangenen Fernsteuersignals entsprechend den Kategoriedaten in eine Folge von Kategoriedatenelementen (Fig. 10);

    **dadurch gekennzeichnet,** daß die Fernsteuervorrichtung ein Fernsteuersignal (Fig. 12) eines Typs empfangen kann, bei dem ein Bit eines Fernsteuersignals jedesmal dann umgekehrt wird, wenn eine Taste betätigt wird, und sie ferner folgendes aufweist:

    -   eine Erzeugungseinrichtung (15) für eine umgekehrte Kategoriedatenfolge zum Erzeugen (n15) einer umgekehrten Kategoriedatenfolge, die dem Fernsteuersignal entspricht und in der ein spezielles Datenbit umgekehrt ist; und
    -   eine Vergleichseinrichtung (15) zum Vergleichen (n25) einer umgekehrten Kategoriedatenfolge, die dem bei einer ersten Betätigung einer Taste einer zu unterrichtenden Fernsteuerung empfangenen Fernsteuersignal entspricht und einer Kategoriedatenfolge, die dem bei einer zweiten Betätigung der Taste empfangenen Fernsteuersignal entspricht;
    -   wobei dann, wenn die der ersten Betätigung der Taste entsprechende umgekehrte Kategoriedatenfolge und die der zweiten Betätigung der Taste entsprechende Kategoriedatenfolge übereinstimmen, eine der Kategoriedatenfolgen auf ein Ausgangssignal von der Vergleichseinrichtung hin in einen Speicher eingespeichert wird (n28).

## Revendications

1. Procédé de mémorisation de commandes dans un dispositif de commande à distance à apprentissage comprenant les étapes de :

   i) réception (n5) d'un premier signal de commande à distance lors de la frappe d'une touche d'un dispositif de commande à distance devant être appris ;

   ii) classement par catégorie (n9) du premier signal de commande à distance en une première séquence d'éléments de données de catégorie, chaque élément de données de catégorie correspondant à une partie respective du premier signal de commande à distance ;

   iii) réception (n21) d'un second signal de commande à distance lors de la frappe suivante de ladite touche dudit dispositif de commande à distance devant être appris ;

   iv) classement par catégorie (n24) du second signal de commande à distance en une seconde séquence d'éléments de données de catégorie ;

   caractérisé par les étapes de :

   v) production (n15) d'une séquence de données de catégorie inversées correspondant audit premier signal de commande à distance dans lequel un bit de données particulier a été inversé ;

   vi) détermination (n25) de la correspondance éventuelle entre ladite seconde séquence d'éléments de données de catégorie et lesdites données de catégorie inversées ; et

   vii) mémorisation (n28) d'une desdites séquences d'éléments de données de catégorie en mémoire s'il est déterminé qu'une telle correspondance existe.

2. Procédé selon la revendication 1, comprenant en outre l'étape de détermination (n8) du type particulier éventuel dudit premier signal de commande à distance, dans lequel un bit de données particulier s'inverse à chaque fois qu'une touche est enfoncée, dans lequel, si ledit premier signal de commande à distance n'est pas d'un tel type, l'étape v) est omise et lesdites première et seconde séquences de données de catégorie sont comparées à l'étape vi) pour déterminer si lesdites première et seconde séquences correspondent.

3. Procédé selon la revendication 1 ou la revendication 2, dans lequel la séquence de données de catégorie mémorisée à l'étape vii) est comprimée (n27) avant mémorisation.

4. Procédé selon l'une quelconque des revendications précédentes, dans lequel les éléments de données de catégorie utilisés pour former chaque séquence de données de catégorie pour ledit signal d'un type particulier ont été auparavant mémorisés en mémoire.

5. Dispositif de commande à distance à apprentissage pour recevoir un signal de commande à distance, pour classer par catégorie le signal de commande à distance dans une séquence d'éléments de données de catégorie, pour les mémoriser dans une mémoire (14) et pour reproduire et émettre le signal de commande à distance sur la base de la séquence d'éléments de données de catégorie lus depuis la mémoire, ledit dispositif de commande à distance à apprentissage comprenant :

   un moyen de mémorisation (15) contenant des données de catégorie utilisées pour le classement par catégorie (n9, n10, n24) dudit signal de commande à distance ; et

   un moyen de conversion (15) pour classer par catégorie le signal de commande à distance reçu en fonction desdites données de catégorie dans une séquence d'éléments de données de catégorie (figure 10) ;

   caractérisé en ce que ledit dispositif de commande à distance à apprentissage est capable de recevoir un desdits signaux de commande à distance (figure 12) d'un type dans lequel un bit d'un signal de commande à distance s'inverse à chaque fois qu'une touche est enfoncée, et en ce qu'il comprend en outre :

   un moyen de formulation de séquence de données de catégorie inversées (15) pour formuler (n15) une séquence de données de catégorie inversées correspondant au signal de commande à distance dans lequel un bit de données particulier a été inversé ; et

   un moyen de comparaison (15) pour comparer (n25) une séquence de données de catégorie inversées, correspondant au signal de commande à distance reçu lors d'une première frappe d'une touche d'un dispositif de commande à distance devant être appris et une séquence de données de catégorie correspondant au signal de commande à distance reçu lors d'une seconde frappe de ladite touche ;

   dans lequel, lorsque la séquence de données de catégorie inversées correspondant à la première frappe de la touche et la séquence de données de catégorie correspondant à la seconde frappe de la touche coïncident l'une avec l'autre, une des séquences de données de catégorie est mémorisée (n28) en mémoire en réponse à une sortie du moyen de comparaison.

Fig. 1

Direct Signal

Pulse Signal

Envelope Signal

Shaping C K T

Microcomputer

Fig. 2

(A) Logic of Received Signal

1 · 1 · 0 · 1 · 0 · 0

(B) Received Signal

T1 · T2 · T1 · T3

(C) Pulse Signal

(D) Envelope Signal

(E) Reproduced Signal

T1 · T2 · T1 · T3

Fig. 5

(A) Input Signal

(B) Pulse Signal (Carrior)

(C) Envelope Signal

α · $t_2$

$t_1$

15

## Fig. 3

```
        ┌──────────┐
        │  Start   │
        └──────────┘
              │
     ┌─────────────────┐
     │  Signal Input   │ S1
     └─────────────────┘
              │
        ╱─────────────╲
       ╱  One Pulse    ╲        S2
      ╱ in Envelope Signal ╲──── NO ──────────┐
       ╲      ?        ╱                       │
        ╲─────────────╱                        │
              │ YES                            ▼
              │            S3           ┌──────────────┐  S5
  ┌──────────────────────────────┐     │ Usual Storage│
  │ To Measure Low-level Periods │     └──────────────┘
  │ T1,T2, T1,T3···of Directly   │            │
  │ Inputted Signal              │            │
  └──────────────────────────────┘            │
              │                                │
     ┌─────────────────┐ S4                    │
     │    Storage      │                       │
     └─────────────────┘                       │
              │◄──────────────────────────────┘
              │
        ┌──────────┐
        │   End    │
        └──────────┘
```

## Fig. 4

```
                                    11 ┌──────────────┐
                                       │  Receiver    │ ◄── Infrared
                                       │ Enve. Pulse  │      Signal
                                       └──────────────┘
                            15              │
┌──────────┐    8  ┌──────┐ INT1 ◄─────────┤
│Key Input │ ◄────│      │◄────────────────┘
└──────────┘   12  │      │                     19
       │       8   │      │           ┌──────────────┐   Infrared
       └──────────►│ INT2 │           │ Transmitter  │──► Signal
                   │      │──────────►│    CKT       │
  13               │ Micro-│          └──────────────┘
┌──────────┐       │compu-│                    18
│Reset CKT │──────►│ter   │ RESET     ┌──────────────┐
└──────────┘       │      │        3  │Transmission LED│
                   │      │──────────►│ Learning LED  │
                   │      │           └──────────────┘
         8         │      │           ┌──────────────┐
      ┌───────────►│      │──────────►│   Buzzer     │─ 17
      │  8         │      │           └──────────────┘
      │ ┌─────────►│      │                    16
      │ │  8       └──────┘           ┌──────────────┐
      │ │ ┌───────►                   │   Memory     │
      ▼ ▼ ▼   14                      │  Control     │
┌──────────┐                          └──────────────┘
│  S-RAM   │◄───────────────────────────────┘
│(64 K bit)│
└──────────┘
```

*Fig. 6A*

```
        ┌──────────────┐
        │    Start     │
        └──────┬───────┘
               ▼
      ( Set SW to STORE Position )  m1
               │
               ▼
          ( Key ON )  m2  ──────────────┐
               │                        │
               ▼                        ▼
        ┌──────────────┐               (I)
        │  One  Beep   │  m3
        └──────┬───────┘
               ▼
      ( Input of Signal A )  m4
               │
               ▼
        ┌──────────────┐
        │  Two  Beeps  │  m5
        │ LED1 ON(Repeat)│
        └──────┬───────┘
               ▼
         ( Key OFF )  m6
               │
               ▼
          ( Key ON )  m7
               │
               ▼
        ┌──────────────┐
        │  One  Beep   │  m8
        └──────┬───────┘
               ▼
      ( Input of Signal B )  m9
               │
               ▼           m10
            ◇ A = B ◇ ──YES──► ┌──────────────────┐  m11
               │               │  Signal B Stored │ ──┐
              NO               └──────────────────┘   │
               ▼           m14                        │
         ◇1Bit Change?◇ ─YES─► ┌──────────────────┐   │
               │               │ Signal A  Stored │ ──┤
              NO               │ Signal B         │   │
               ▼               └──────────────────┘   │
              (II)                  m16               ▼
                                                    (III)
```

# Fig. 6B

Ⅱ

m15 — 2Bit Change ?
- NO →
- YES ↓

m17 — One Beep / LED1 ON (Repeat)

m18 — Key OFF

m19 — Key ON

m20 — One Beep

m21 — Input of Signal C

m22 — 2Bit Change ?
- NO →
- YES ↓

m23 — To Formulate Signal D

m24 — Signal A / Signal B / Signal C / Signal D — Stored

Ⅲ

m12 — One Beep / LED2 ON (End)

m13 — Key OFF

m25 — Four Beeps / LED1 Blinking (Error)

Key OFF

Ⅰ

Keying Again ?
- YES
- NO

m26 — Next Key ?
- YES
- NO

m27 — Set SW to USE Position

End

18

# Fig. 7

**(A) Category Pattern 1**

**(E) Category Pattern 5**

**(I) Category Pattern 9**

**(B) Category Pattern 2**

**(F) Category Pattern 6**

**(J) Category Pattern 10**

**(C) Category Pattern 3**

**(G) Category Pattern 7**

**(K) Category Pattern 11**

**(D) Category Pattern 4**

**(H) Category Pattern 8**

**(L) Category Pattern 12**

## Fig. 8

f1

-3.125% +3.125%

f2

-3.125% +3.125%

f3

-3.125% +3.125%

$\frac{1}{32}$ = 3.125%

Frequency

## Fig. 9

(A)

(B)

(C.)

13th Bit | 14th Bit

1st Bit | 2st Bit

1st CODE

Data OFF Period between 1st and 2nd Codes 50 Bits

start bit

2nd CODE

## Fig. 10

bit NO. | 1 | 2 | 3 | 4 | 5 |

Category Number Data

(A)            ) ) Reversed        1   3   1

(B)                               1   1   3

(C)            ) ) Reversed        1   3   2

(D)                               1   1   4

(E)            ) ) Reversed        1   4

(F)                               1   1   1

(G)            ) ) Reversed        1   4

Same Pattern

(H)                               1   1   1

## Fig. 11A

Flowchart (Fig. 11A):

- **A** → **n14** RC-5 ? — YES → **n15** Pit Pattern Reversed Code; NO → **n16**
- **Main** → (**B**) → **n1** Key Reading
- **n2** Learnable Key ? — NO → (to Transmission Processing Flow / **C**); YES →
- **n3** Mode Check — Transmission → Transmission Processing Flow; Learning →
- **n4** RAM Initializing / Learn. Mode Initialization →
- **n5** Receipt →
- **n6** Error (N, t) — YES → (to **C**); NO →
- **n7** Freq. Calcu. →
- **n8** RC-5 (Search in ROM) — NO → **n10** Categorization → Category Number → **n11**; YES → **n9** Category Data →
- **n11** Decision by Majority →
- **n12** Memory Overflow — YES → (**E**); NO →
- **n13** Two Beeps / LED 1 ON (Repeat) → (**A**)

Right branch:
- **n15** Pit Pattern Reversed Code → **n16** Key Reading →
- **n17** 1st Key = 2nd Key ? — NO → (to **C**); YES →
- **n18** Learnable Key ? — NO → (to **C**); YES →
- **n19** Mode Check — Trans. → Transmission Processing Flow; Learning →
- **n20** Learn. Mode Initialization →
- **n21** Receipt →
- **n22** Error (N, t) — YES → (to **C**); NO →
- **n23** Freq. Calcu. →
- **n24** Categorization →
- **n25** 1st Signal = 2nd Signal ? — NO → (to **C**); YES → (**D**)

# Fig. 11B

C    E    D

**Error Display (1)**

**Error Processing**

n26  **Learn. Data Sorting**
( To Search and erase
Previous Data of Same
Key in Memory Area )

n27  **Data Compression**
( To compress 110 Bit
Data Using Repeat
Length, Repeat
Number, Repeat Start,
etc. )

n28  **Storage**

n29  **Memory Overflow**
YES

NO

n30  **One Beep**
**LED2 ON (END)**

**Error Display (2)**

B ← YES — **Key Input**

NO

**Power - down**

## Fig. 12 Prior Art

## Fig. 13 Prior Art

## Fig. 14 Prior Art

## Fig. 15 Prior Art

Fig. 16
Prior Art

Fig. 17 Prior Art

Fig. 18 Prior Art